# EUROPEAN PATENT APPLICATION

(11) **EP 1 292 095 A2**
(43) Date of publication of application: **12.03.2003**
(21) Application number: 02019479.1
(22) Date of filing: 30.08.2002
(51) Int. Cl.: H04N 1/00

(54) **Method and apparatus for scanning hard-copy images to electronic mail**

(30) Priority: 31.08.2001 US 316573 P; 02.04.2002 US 114870
(71) Applicant: Xerox Corporation, Rochester, New York 14644 (US)
(72) Inventor: Rublee, Darrell L., Pittsford, New York 14534 (US); Rahgozar, Armon M., Penfield, NY 14526 (US); Campbell, James C., Fairport, NY 14450 (US); Watson, Keith S., Rochester, NY 14606 (US); Barrett, Michael W., Fairport, New York 14450 (US); Cucci, Peter M., Rochester, NY 14617 (US); Crumrine, Robert E., Fairport, NY 14450 (US); D'Entrecasteaux, Daryl, Cambridgeshir, England CB3 6BQ (GB)
(74) Representative: Grünecker, Kinkeldey, Stockmair & Schwanhäusser Anwaltssozietät

(57) **Abstract**

In a network-based input scanning system, wherein a sender scanning a hard-copy document at a scanner sends the resulting image data to an electronic mail address, the scanner appends an electronic mail address of the sender in the "From:" space of the electronic mail message. In this way, status messages or other responses to the electronic mail message bearing the image data are directed to the sender's computer, and not only to the scanner itself. The identity of the sender is determined by a network-login step the sender uses to access the scanner.

## Description

The present invention relates to scanning hard-copy images to electronic mail addresses.

In the networked office-equipment context, it is a desirable feature to enable users having hard-copy documents to scan those images at a scanner and have electronic image data based on the images sent to one or more desired e-mail (electronic mail) addresses. In the basic "scan-to-e-mail" model, a user standing at a scanner (or using a scanner feature set in a digital copier) enters, through a selection made at a user interface associated with the scanner, a destination e-mail address, either the user's own e-mail address or another person's. The image data, typically in TIFF or .pdf format, is then sent to the destination computer as an attachment to an e-mail message. In general, the "work" of converting the hard-copy image data to a usable format is performed largely at the scanner, while the work of directing the image data to the desired e-mail address is largely performed by an e-mail server which shares a network with both the scanner and a population of possible destination computers.

In many practical applications of hard-copy scanning, the scanner hardware is a "hallway" resource shared by many human users, even though each human user typically has her own computer and associated e-mail account. An e-mail server, or an authentication server which governs the access of persons (via their computers) onto the network, generally has no indication of which human, among the owners of the various computers on a network or subnetwork, is sending image data from a shared scanner at a given time. However, such information as to who is using the scanner at a given time is useful, for instance in case an error or confirmation message must be sent back to the user who scanned in the hard-copy document. If there was a delay in determining the status of the confirmation message, the human user may have long left the scanner and gone back to her computer by the time the message is available. It would therefore be desirable to have a system whereby the human user of an scanner is identified with each use of the scanner.

US Patents 6,133,985 and 6,181,893 disclose methods relating to the transmission of scanned image data within a network.
In a scan-to-e-mail service provided by Hewlett-Packard®, known to the inventors as of the filing hereof, the scanner itself is assigned an electronic mail address.

In a scan-to-e-mail service provided by Canon®, known to the inventors as of the filing hereof, the scanner is associated with a dedicated personal computer, and images are sent from an e-mail account controlled by the computer.

According to one aspect of the present invention, there is provided a method of transmitting image data from an input scanner to a destination computer, comprising the steps of: identifying a user of the input scanner; with the input scanner, scanning a hard-copy document to create image data; and sending a message relating to the scanning step to a computer associated with the identified user of the input scanner.

According to another aspect of the present invention, there is provided an apparatus useful for scanning documents. A scanner records images and yields image data therefrom. Authentication means authenticate the apparatus on a network, the authentication means accepting information identifying a user of the apparatus. Electronic mail means append the image data to an electronic mail message, and send the electronic mail message. Association means associate the electronic message with the identified user of the apparatus.

Figure 1 is a diagram of a network-based scanning system, showing the context of the present invention.

Figure 2 is a diagram showing the interaction of a scanner and other network-based devices according to one embodiment of the present invention.

Figure 3 is a diagram showing the elements of a scanner according to one embodiment of the present invention.

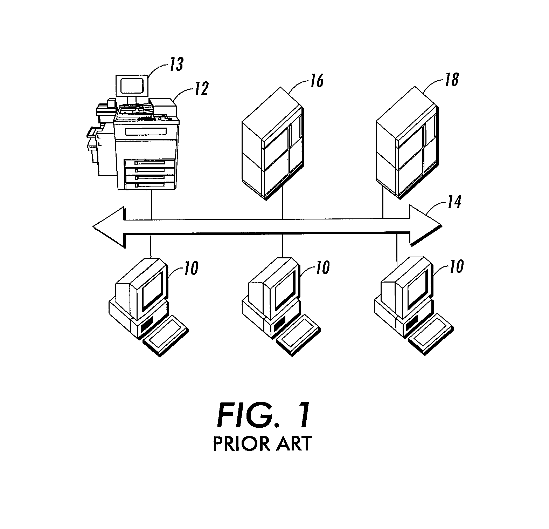

Figure 1 is a diagram of a network-based scanning system, showing the context of the present invention. In a typical office situation, each human user is assigned his own computer, such as indicated as 10. Each computer typically is associated with a unique e-mail address. In contrast, multiple human users typically share a scanner such as indicated as 12. A scanner 12 can be in a stand-alone form, or, in many cases, the scanner can be a set of functions performed by a multifunction device or "digital copier," such as of the Xerox® Document Centre™ series. (In the digital copier case, the machine 12 will have both independent input scanning and printing functions: when the input scanner is used to provide data to the printer, copying in effect results.) Hard-copy documents or other images desired to be "scanned" (meaning, the images therefrom recorded as digital data) are submitted to scanner 12. In the present embodiment of the present invention, the resulting image data from the scanning step is desired to be sent, such as an attachment to an e-mail message, to at least one destination computer 10 of a population of computers.

The scanner 12 is connected to the population of computers 10 via a network 14, of a type known in the art. In order to enable secure network communication among computers 10 and other equipment such as scanner 12, there is typically provided an "authentication server" 16, the general functions of which are known in the art. Briefly, authentication server 16 acts to provide security for network access to files and functions available on equipment on network 14. Typically, a user at a computer 10 logs into network 14 by contacting authentication server 16 and providing both a login name and a password: as is known in the art, it is possible that entry of one password thus provides access to multiple files and functions available on the network 14.

Also provided on network 14 is an electronic mail (e-mail) server 18, which provides functions of trafficking in messages both within and beyond the immediate network 14 as is well known.

It will be noted that scanner 12, whether as a stand-alone or as part of a multifunction device, resides on network 14: the machine itself has, and even each individual function provided by the machine may have, an associated internet and/or SMTP address through which other computers or servers on the network 14 may interact therewith.

In overview, according to the present embodiment of the invention, a network-based scan-to-e-mail scenario proceeds as follows. One human user of a population of potential human users goes up to scanner or digital copier 12, with a document to be scanned (as used herein, "document" shall mean any hard-copy image or images to be recorded as digital data). The human user is also associated (such as by having an e-mail account) with at least one computer 10 on the network. The scanner or digital copier has associated therewith a user interface, generally indicated as 13 in Figure 1. The user interface includes some means, such as a scrolling menu and/or numerical or alphanumeric keyboard, by which the human user enters, first, his own name or other identifier; and then, a network login password. This "network login" is passed, through known means, to the authentication server 16, which in turn allows access to the user to whatever "public" functions and files exist on the network. The network login through scanner user interface 13 should be equivalent in result to a network login performed by the user on a computer 10, and thus the scanner 12 is provided with the necessary utilities (such as, for example, Kerberos, SMB, or Novell® NDS™ authentication, of course in conjunction with the requirements of the authentication server 16) for this network login; such utilities are dedicated to the user interface 13 on scanner/digital copier 12, as though the machine were another computer on the network 14.

Once the login is successful, as determined by authentication server 16, the human user is not only given access to the network via scanner 12, he is also identified as a person. This identification is important for various reasons. First, once a document is scanned to a destination e-mail address belonging to a human recipient, the recipient would wish to send a return e-mail to the sender's computer, not to the scanner 12. Also, if there is a error associated with the sending, the error message, or other status message (typically from e-mail server 18, according to known techniques of administrating e-mail) is best sent to the sender's computer, and not to the scanner 12, as the sender may have long walked away from the scanner 12 by the time the error message is ready (although it may be desirable to send error or other status messages to both the sender's computer and the scanner 12).

Thus, according to the present embodiment of the present invention, soon after the network login at scanner 12, information derived from the network login, such as the login name, is associated, within a database which can be resident in scanner 12, or elsewhere, with an e-mail address of the identified sending person. The e-mail address may or not be associated with a computer 10 on the immediate network 14.

An alternate technique for identifying a user of the scanner is to instruct the user, at the time he desires to scan a document, to enter some sort of accounting or auditing code at the scanner, much in the manner of entering a network login. The code, instead of the login name, can be used to identify the person at the scanner with an e-mail address. In the case of entering an auditing code, the code can relate to billing of the scanning action (as in a copy-shop context) or to a client associated with the document being scanned (as in a lawfirm context). What auditing code is used may affect the determined e-mail addresses of persons to receive status reports. Indeed, entry of an auditing code may be used to determine a set of destination e-mail addresses of the image data, e.g., in a lawfirm context, entry of a matter number identifying a case may cause the system (whether at the scanner itself or elsewhere) to automatically send the scanned image data to one or more predetermined e-mail addresses, such as to the lawyers and paralegals assigned to the particular identified case. Use of an auditing code can be in conjunction with or instead of use of a network login procedure for purposes of carrying out the present invention.

The user scans in his document and the images from the document are recorded as digital image data, typically in TIFF or PDF format. The image data is appended as an attachment to an e-mail message, for which the user selects a destination at user interface 13. The destination address is placed in the customary "To:" space in the e-mail message, and is thus processed by e-mail server 18 in a normal manner. According to the present embodiment, when the e-mail message is sent from scanner 12 to e-mail server 18, the e-mail address of the sender, as determined above by association with the network login name, is placed in the "From:" space in the e-mail message. In this way, if the e-mail message bearing the image data is replied to, such as by the e-mail server 18 (for an error or status message), or by the recipient, the reply will go to the sender's e-mail address.

In addition to, or instead of, appending the e-mail address of the identified user in the "From:" space of the e-mail message, the name of or other information associated with the identified user can be placed, via known means, in the body of the e-mail message, to which the file containing the image data forms an attachment.

Depending on various possible embodiments of the invention, the association of the scanner 12 with a particular human user can be made temporary, as the scanner 12 is a resource to be shared among many human users. There may be provided, for example, a time-out feature which terminates the network login, or just the association with a particular human user, after three minutes from login, or one minute following the last paper feed at scanner 12.

A variation on the present invention provides for sending error or status messages to the scanner 12 and/or to the user's own computer, depending on certain operating conditions. For example, if an error in sending is such that an error message is generated while the human user is likely to be still standing at scanner 12, such as within five seconds after the last sheet fed through the scanner, the error message could be sent to the scanner 12 instead of or as well as to the user's computer. If the error is of a type that sending any message to a destination computer is impossible (e.g. the e-mail server 18 is down), the error message would be sent to the scanner 12. Once received at scanner 12, the message can be displayed on user interface 13, or, if the scanner 12 is part of a multi-function device, the error message can be caused to be printed out at the machine.

Another variation of the invention is its application to a network facsimile context. In this scenario, at network login, the human user so identified is associated, via a database, with a phone number (perhaps in addition to an e-mail address). Whether the user is using the scanner 12 for scan-to-e-mail or for sending a facsimile, a status or error message to the user's facsimile number, or, conceivably, as an audio message to a phone number.

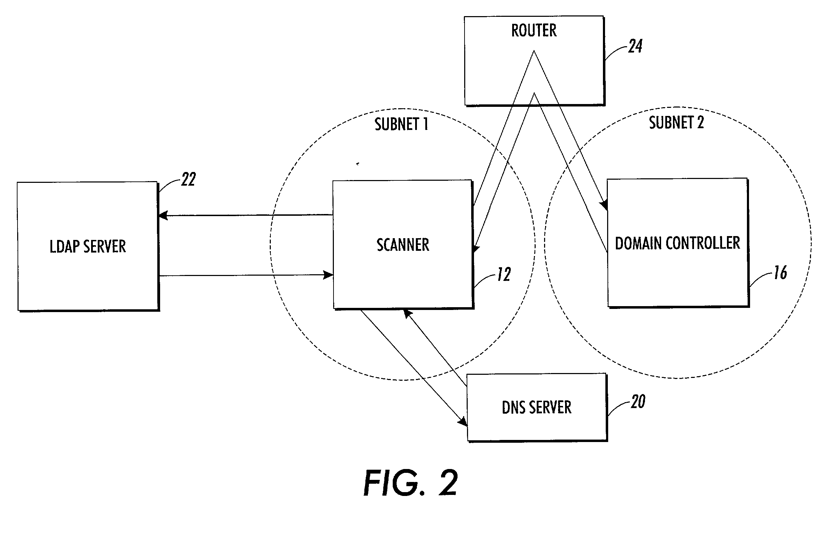

Figure 2 is a diagram showing the interaction among various machines and servers according to one embodiment of the present invention. In addition to a scanner 12 and authentication server (also known as a domain controller) 16 as described above, there is further provided a DNS or "dynamic name server" 20 and an LDAP ("lightweight directory access protocol") server 22. As scanner 12 and authentication server 16 may exist on different subnetworks, there may further be provided a router 24.

In the context of Figure 2, one method according to the present invention proceeds as follows. The scanner 12 sends the host name of the authentication server 16 to the DNS 20, and the DNS 20 responds by sending the IP address of the authentication server 16 to the scanner 12. When a user at the scanner logs into the network, the scanner then sends an authentication request to the authentication server 16, typically through router 24, and the authentication server 16 responds back to the scanner 16 whether or not the user was successfully authenticated. If the user is authenticated, the scanner 12 then contacts an LDAP server 22 and thus tries to match an e-mail address against the user's login name. If the LDAP query is successful, the user's e-mail address is placed in the "From:" field of an e-mail sent from the scanner 12.

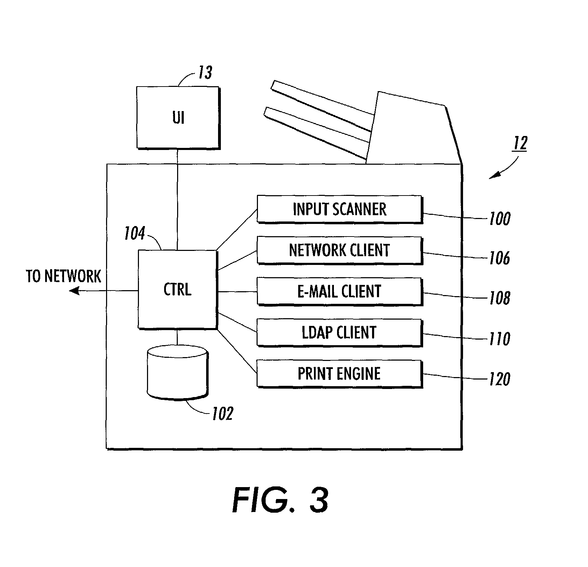

Figure 3 shows elements of one embodiment of the present invention, as present in a piece of office equipment, such as a stand-alone scanner or a digital copier having a scanner function. The "machine" 12 includes hardware and software, such as a document handler and a photosensitive imaging device along with image-processing software, such as indicated by 100. Image data recorded and otherwise processed by the input scanner 100 is temporarily retained in a memory 102, until the data is ready for sending.

Other functions relevant to the present invention are carried out by various "clients" within the machine 12 as shown. As used herein, a "client" can be manifest wholly or partly in software, hardware, or both, and individual clients can be manifest in dedicated cards or boards, portions thereof, or as software functions running on one or more general-purpose processors. The various clients are under the control of a central control 104, which also is associated with user interface 13.

The network client 106 interfaces with a network authentication server, as noted above, to carry out authentication of the machine 12 on a network. The E-mail client 108 carries out functions relating to sending and receiving e-mail by the machine 12. The LDAP client 110 is used to inquire an LDAP server on the network to associate an entered network login name with an e-mail address, as described above.

The machine 12 as shown may be in the form of a digital copier, and as such may further include a print engine 120. As mentioned above, certain status messages received as e-mail messages by the machine 12 may be either displayed on Ul 13 or printed out at print engine 120.

## Claims

1. A method of transmitting image data from an input scanner to a destination computer, comprising:
identifying a user of the input scanner;
with the input scanner, scanning a hard-copy document to create image data; and
sending a message relating to the scanning step to a computer associated with the identified user of the input scanner.

2. The method of **claim 1**, the identifying step including the user entering an identifying code to a user interface associated with the input scanner.

3. The method of **claim 1**, the identifying step including a user entering a network access code to a user interface associated with the input scanner, the network access code being associated with a function of an authentication server, and
associating the network access code with the user.

4. The method of **claim 1**, the identifying step including a user entering an audit code to a user interface associated with the input scanner, and
associating the audit code with the user.

5. The method of **claim 1**, the sending step including sending an electronic mail message to the computer associated with the identified user of the input scanner.

6. The method of **claim 1**, further comprising sending image data as an electronic mail message from the scanner to an electronic mail server.

7. The method of **claim 6**, further comprising appending a name associated with the identified user, in a body of the electronic mail message and/or appending a "from" address, associated with the identified user, in the electronic mail message.

8. The method of **claim 7**, the sending step including the electronic mail server sending a message to the "from" address.

9. The method of **claim 1**, further comprising if a predetermined condition relating to sending image data to the electronic mail server occurs, the electronic mail server sending a message to the scanner.

10. The method of **claim 9**, wherein the scanner is associated with a printing apparatus, and wherein the message to the scanner is printed by the printing apparatus.

11. The method of **claim 1**, further comprising after a predetermined time period, stopping identifying a user of the input scanner.

12. The method of **claim 1**, the sending step including sending a pop-up message to the computer associated with the identified user of the input scanner.

13. An apparatus useful for scanning documents, comprising:
a scanner for recording images and yielding image data therefrom;
authentication means for authenticating the apparatus on a network, the authentication means accepting information identifying a user of the apparatus;
electronic mail means for appending image data to an electronic mail message, and sending the electronic mail message;
association means for associating the electronic message with the identified user of the apparatus.

14. The apparatus of **claim 13**, the authentication means including a network client for contacting an authentication server on the network.

15. The apparatus of **claim 13**, the authentication means accepting a network login name associated with the user.

16. The apparatus of **claim 13**, the association means performing a step to associate the login name with an electronic mail address of the user and/or appending information about the identified user to a body of the electronic mail message and/or associating an electronic mail address of the identified user with a "From:" space in the electronic mail message.

17. The apparatus of **claim 16**, the association means contacting an LDAP server to associate the login name with an electronic mail address of the user.
